(19) Europäisches Patentamt
European Patent Office
Office européen des brevets

(11) EP 0 475 888 B1

# (12) FASCICULE DE BREVET EUROPEEN

(45) Date de publication et mention de la délivrance du brevet:
**14.04.1999 Bulletin 1999/15**

(51) Int Cl.[6]: **C09B 67/46**, C08J 3/20, C09B 67/20

(21) Numéro de dépôt: **91810610.5**

(22) Date de dépôt: **31.07.1991**

## (54) Dispersion de colorant liquide

Flüssige Farbstoffdispersion

Liquid dye dispersion

(84) Etats contractants désignés:
**BE DE FR GB IT**

(30) Priorité: **10.09.1990 CH 2937/90**

(43) Date de publication de la demande:
**18.03.1992 Bulletin 1992/12**

(73) Titulaire: **BASF Coatings**
**60600 Breuil Le Sec (FR)**

(72) Inventeurs:
- **Riblet, Jean-Jacques**
  **F-74250 Viuz en Sallaz (FR)**
- **Catherin, Gilles**
  **F-74100 Annemasse (FR)**

(74) Mandataire: **ARDIN & CIE S.A.**
**Rue de Genève 122**
**Case Postale 56**
**1226 Genève-Thônex (CH)**

(56) Documents cités:
**FR-A- 1 281 976**
**FR-A- 1 461 148**
**GB-A- 1 520 751**
**US-A- 2 079 229**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet une préparation pour la coloration dans la masse de matières plastiques lors de la transformation de ces dernières consistant en une dispersion liquide de matières colorantes destinée à être incorporée en tant qu'ingrédient dans ces matières plastiques avant ou pendant leur transformation, la préparation comprenant au moins une matière colorante et un véhicule conférant à la préparation une consistance liqude.

On connaît principalement quatre types différents de coloration dans la masse de matières plastiques :

a) la coloration directe du polymère lors de sa synthèse,
b) la coloration par mélange maître à concentration de colorant ou pigment très élevé,
c) la coloration par adjonction d'une poudre contenant le colorant ou pigment au granulat, et
d) la coloration par dispersion de colorant liquide.

Par le brevet FR-A-1281976, on connaît des compositions tinctoriales qui sont destinées à être appliquées sur des compositions de revêtements en milieu aqueux ou solvant. Ces compositions comprennent un éther alcool avec un groupe alkyle de 1 à 15 atomes et un groupe $C_2H_4OH$. Ces compositions ne constituent pas un ingrédient pour la fabrication de matières plastiques et leur coloration dans la masse, mais sont des revêtements, enduits ou peintures proprement dits. Leur composition est sous une forme qui les rendraient inutilisables pour la transformation et la coloration dans la masse de matières plastiques.

Le brevet US-A-2079229 décrit des pâtes colorantes comprenant des éthers à chaîne aliphatique avec 8 à 18 carbones. Ces pâtes sont appliquées sur un substrat pour former des papiers carbone, des rubans pour machines à écrire et des stencils et ne forment donc pas un ingrédient pour la fabrication de matière plastique. Ces pâtes sont présentées sous une forme et une composition qui les rendraient trop inflammables, donc inutilisables en tant que préparation pour la transformation et la coloration dans la masse de matières plastiques. Il est à noter que les contraintes techniques de la coloration dans la masse par injection ou extrusion sont entièrement différentes des contraintes techniques rencontrées dans l'application de revêtements.

La présente invention concerne une préparation du dernier type de coloration d) cité ci-dessus dans lequel une dispersion de colorant liquide ou pâteuse est mélangée en tant qu'ingrédient à la matière plastique granulée avant ou pendant sa transformation, par exemple dans une extrudeuse ou presse à injection.

La plupart des dispersions connues utilisent des plastifiants, en particulier des adipates et/ou des phtalates qui, en fonction du taux d'incorporation dans la matière plastique, modifient de façon sensible les caractéristiques du polymère.

On connaît également des dispersions contenant des esters de sorbitan en tant qu'agent tensio-actif, telles que décrites dans les brevets français Nos 2262089 et 2265835. Ces dispersions peuvent, dans certains cas, donner naissance à des gauchissements des articles injectés, à des difficultés de mise en oeuvre, à un patinage de vis, à des dépôts de colorants liquides sur les vis et les moules, et nécessitent une agitation avant l'emploi par suite d'une sédimentation.

Le but de la présente invention est d'améliorer les caractéristiques des dispersions connues en permettant :

a) d'augmenter la concentration pigmentaire de la dispersion liquide sans modifier les propriétés rhéologiques, de développer la force colorante de la dispersion liquide, autorisant donc des taux d'utilisation très faibles de dispersion liquide pour colorer les polymères, ce qui est très avantageux du point de vue économique du fait d'une moindre altération des propriétés mécaniques des polymères.
b) d'éviter des modifications sensibles des caractéristiques du polymère à colorer, en particulier d'éviter des effets de plastification et de lubrification du polymère,
c) d'améliorer la stabilité dimensionnelle de l'article injecté, de réduire ou d'annuler les phénomènes de retrait et de gauchissement,
d) de réduire à un minimum l'absorption d'humidité évitant ainsi une altération de l'aspect de surface par givrage des matières plastiques hygroscopiques,
e) de conserver son homogénéité au colorant liquide lors du stockage et
d) d'éviter la stagnation de colorant sur l'outillage et de permettre un nettoyage rapide de la machine lors du changement de couleur.

Pour obtenir les objectifs précités, la préparation conformément à l'invention est caractérisée en ce que le véhicule comporte des hydrocarbures aliphatiques à chaînes $C_{16}$ à $C_{24}$ choisis parmi le groupe comprenant les éthers aliphatiques à chaînes $C_{16}$ à $C_{22}$, les éthers-alcools aliphatiques à chaînes $C_{19}$ à $C_{21}$ et les acétals à chaînes $C_{18}$ à $C_{24}$.

Par ces caractéristiques, on obtient des préparations de dispersions permettant une concentration pigmentaire élevée sans modification des propriétés rhéologiques, assurant une force colorante élevée, un taux d'utilisation

faible et une bonne tenue au froid et au stockage. On note en outre l'absence d'effets de plastification et de lubrification du polymère.

Selon un mode d'exécution avantageux de l'invention, lesdits éthers présentent une prédominance de chaînes de formule $C_{20}H_{42}O$.

Avantageusement, les éthers-alcools présentent une prédominance de chaînes de formule $C_{21}H_{44}O_2$. Le véhicule peut, en outre, comprendre au moins un des constituants suivants : un alcool primaire à chaînes $C_8$ à $C_{11}$, un acétal à chaînes $C_{18}$ à $C_{24}$ et un alcène à chaînes $C_{16}$ à $C_{22}$.

Selon des variantes de l'invention, la dispersion peut comprendre en outre au moins un agent tensio-actif choisi parmi le groupe comprenant le dioctylsulfosuccinate de sodium, le benzoate de sodium, les condensats d'acide gras, les esters phosphoriques et les alkylphénols.

D'autres avantages ressortent des caractéristiques exprimées dans les revendications dépendantes et de la description exposant ci-après des modes d'exécution particuliers de l'invention.

Les dispersions de colorant liquide utilisées pour colorer dans la masse les matières plastiques comportent un véhicule auquel sont ajoutées les matières colorantes. Le rapport teneur en matières colorantes du véhicule dépend de la nature des matières colorantes, du polymère à colorer utilisé et de l'intensité de coloration désirée.

Les composants principaux du véhicule sont des hydrocarbures aliphatiques oxygénés présents dans le véhicule à des teneurs variant entre 50 et 100 % en poids.

Ainsi, le véhicule est constitué d'un ou plusieurs des composants suivants :

- un éther aliphatique à chaînes $C_{16}$ à $C_{22}$ de formule

$$R_1 - CH_2 - O - CH_2 - R_2,$$

  $R_1$ et $R_2$ étant des radicaux ramifiés à groupes méthyl, par exemple $R_1 = CH_3$ et $R_2 = C_{17}H_{35}$. Cet éther en $C_{16}$ - $C_{22}$ présente une prédominance de chaînes aliphatiques de formule $C_{20}H_{42}O$.

- un éther-alcool aliphatique à chaînes $C_{19}$ à $C_{21}$ de formule

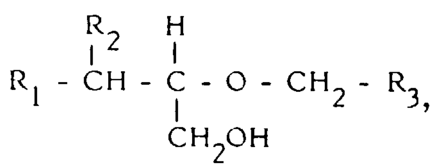

  $R_1$, $R_2$ et $R_3$ étant des radicaux ramifiés à groupes méthyl, par exemple $R_1 = R_2 = CH_3$ et $R_3 = C_{15}H_{31}$. Cet éther-alcool présente une prédominance de chaînes aliphatiques de formule $C_{21}H_{44}O_2$.

- des acétals lourds à chaînes $C_{18}$ à $C_{24}$ de formule

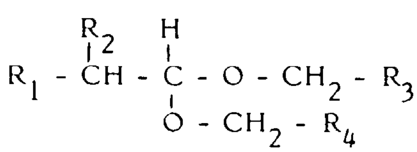

  avec à titre d'exemple $R_1 = R_2 = CH_3$ et $R_3 = R_4 = C_9H_{19}$

- des alcènes à chaînes $C_{16}$ à $C_{22}$

- des alcools primaires $C_8$ - $C_{11}$ de formule $R - CH_2OH$,
  R étant des chaînes ramifiées a groupes méthyl $C_7$ à $C_{10}$.

Ces composants sont utilisés dans trois types principaux de véhicules à éthers aliphatiques conformément à l'invention :

A) Un véhicule contenant, comme seul composant principal, l'éther aliphatique à chaînes $C_{16}$ à $C_{22}$ avec une prédominance de chaînes $C_{20}H_{42}O$. Cet éther en $C_{16}$ - $C_{22}$ présente les caractéristiques suivantes :

| Propriétés | Valeurs | Méthode de test | |
|---|---|---|---|
| | | ETM | ASTM |
| Indice d'acidité (mg KOH/g) | 0,5 max | | D-1045 |
| Aspect | liquide clair | | |
| Nombre de carbonyle (mg KOH/g) | 10 max | DAM 12/82 | |
| Couleur (Pt-Co) | 60 max | | D-1209 |
| Densité (g/cm$^3$ à 20°C) | 0,8305 | | D-1298 |
| Distillation | | | D-86 |
| IBP (°C) | 298 | | |
| 50 %(°C) | 318 | | |
| FBP (°C) | 328 | | |
| Nombre d'hydroxyde (mg KOH/g) | 35 max | AMS 240.10 | |
| Viscosité (cSt à 20°C) | 11,3 | | D-445 |
| (cSt à 30°C) | 8,0 | | |
| (cSt à 40°C) | 6,0 | | |
| Tenue en eau (wt %) | 0,2 max | DAM 9/77 | |
| Point de trouble (°C) | <-40 | | |
| Point éclair (PMCC), °C | 166 | | D-93 |

Cette substance est commercialisée par la firme Exxon sous la dénomination MD-E-20.

B) Un véhicule comportant un mélange de 40 % environ de l'éther aliphatique à chaînes $C_{16}$ à $C_{22}$ et 60 % environ de l'éther-alcool $C_{19}$ à $C_{21}$ tel que défini ci-dessus. Ce mélange présente les propriétés suivantes :

| Propriétés | Valeurs | Méthode de test | |
|---|---|---|---|
| | | ETM | ASTM |
| Indice d'acidité (mg KOH/g) | 0,5 max | | D-1045 |
| Aspect | liquide clair | | |
| Nombre de carbonyle (mg KOH/g) | 10 max | DAM 12/82 | |
| Couleur (Pt-Co) | 60 max | | D-1209 |
| Densité (g/cm$^3$ à 20°C) | 0,8674 | | D-1298 |
| Distillation | | | D-86 |
| IBP (°C) | 327 | | |

(suite)

| Propriétés | Valeurs | Méthode de test | |
|---|---|---|---|
| | | ETM | ASTM |
| 50 %(°C) | 341 | | |
| FBP (°C) | 349 | | |
| Nombre d'hydroxyde (mg KOH/g) | 150 min | AMS 240.10 | |
| Viscosité (cSt à 15°C) | 108,7 | | D-445 |
| (cSt à 20°C) | 74,7 | | |
| (cSt à 40°C) | 24,9 | | |
| Tenue en eau (wt %) | 0,2 max | DAM 9/77 | |
| Point de trouble (°C) | <-40 | | |
| Point éclair (PMCC), °C | 175 | | D-93 |

Ce mélange est commercialisé par la firme Exxon sous la dénomination MD-EA-21.

C) Un véhicule composé d'un mélange de plusieurs hydrocarbures oxygénés, principalement des éthers et alcools aliphatiques. La composition de ce mélange est :

- 5 à 12 % d'alcool primaire $C_8$ - $C_{11}$ de formule R $CH_2$ OH;
- 10 a 30 % d'éthers-alcools aliphatiques chaînes $C_{19}$ a $C_{21}$, tels que défini ci-dessus;
- 40 à 60 % d'éthers aliphatiques à chaînes $C_{16}$ à $C_{22}$;
- 6 à 10 % d'acétals lourds à chaînes $C_{18}$ à $C_{24}$ et l'alcènes à chaînes $C_{16}$ à $C_{22}$.

Ce mélange présente les propriétés suivantes :

| Propriétés | Valeurs | Méthode de test | |
|---|---|---|---|
| | | ETM | ASTM |
| Indice d'acidité (mg KOH/g) | 0,5 - 2,5 | | D-1045 |
| Aspect | liquide clair | | |
| Nombre de carbonyle (mg KOH/g) | 1,0 - 4,0 | DAM 12/82 | |
| Couleur (Gardner) | 4 max | | D-154 |
| Densité (g/$cm^3$ à 20°C) | 0,840 | | D-1298 |
| Nombre d'hydroxyde (mg KOH/g) | 40 - 70 | AMS 240.10 | |
| Viscosité (cSt à 20°C) | 15 | | D-445 |
| Tenue en eau (wt %) | 0,2 max | DAM 9/77 | |
| Point éclair (PMCC), °C | 110 min | | D-93 |

Ce mélange est commercialisé par la firme Exxon sous la dénomination MD-OC-H.

Selon la nature des matières colorantes utilisées, les propriétés tensioactives du véhicule et donc de la dispersion sont spécifiquement adaptées en ajoutant des constituants choisis parmi le groupe, comprenant le dioctylsulfosuccinate de sodium, le benzoate de sodium, le condensat d'acide gras, le condensat d'acide gras dérivé d'ammonium quaternaire, les esters phosphoriques et les alkylphénols.

Le dioctylsulfosuccinate de sodium de formule

$$(CH)_2COOC_8H_{17}CHCOOC_8H_{17}SO_3Na$$

et le benzoate de sodium de formule $Na(C_6H_5COO)$ sont ajoutés à la dispersion avec des teneurs maximales de 10 %, respectivement de 2 %. De préférence, on utilise ces mouillants-dispersants dans un mélange contenant 85 % de dioctyl-sulfosuccinate de sodium et 15 % de benzoate de sodium et présentant les caractéristiques suivantes :

| | | |
|---|---|---|
| Granulométrie | 15 - 150 microns | |
| Indice d'iode | 2,5 max | (selon Norme ASTM D-151) |
| Indice d'acide | 0,25 max | (selon Norme ASTM D-150) |
| Densité | 1,1 | (selon Norme ASTM D-4052) |

Ce mélange est commercialisé sous la marque "AEROSOL OTB" par la maison Devineau (42, rue du Paradis, F-75010 Paris).

Le condensat d'acide gras et le condensat d'acide gras dérivé d'ammonium quaternaire sont ajoutés avec des teneurs maximales de 5 %, respectivement 2 % à la dispersion. Ces deux constituants sont hyperdispersants, stabilisateurs de viscosité, et permettent d'augmenter d'avantage la concentration pigmentaire du colorant liquide, la force colorante et de réduire la viscosité.

On utilise avantageusement un condensat d'acide gras d'une densité de 0,91 et d'une viscosité (20°C, 1000 $sec^{-1}$) de 3,8 Pa. s et un condensat d'acide gras dérivé d'ammonium quaternaire d'une densité de 0,93 et d'une viscosité de 20,3 Pa. s. Ces substances sont vendues sous la marque commerciale "SOLSPERSE 3000 et 17000" par la maison ICI (1, av. Newton, F-92142 Clamart).

Ces hyperdispersants "SOLSPERSE" ont une structure chimique originale spécialement conçue pour leur utilisation dans les dispersions de plastifiants. Ils sont constitués de deux parties, chacune d'elles remplissant séparément une fonction essentielle :

- un groupe d'adhérence qui est fortement absorbé en surface des produits solides (pigment, etc.) et
- une chaîne polymérique ayant une forte affinité pour certains liquides organiques dans le but d'obtenir une stabilisation maximum de la dispersion.

L'ester phosphorique est ajouté avec une teneur maximale de 6 % et joue le rôle de réducteur de viscosité et d'agent mouillant. On utilise de préférence un dispersant à base de sel de potassium d'un ester phosphorique d'une densité de 1,1 - 1,3 et d'un pH de 7,5 ± 0,5. Ce constituant est vendu sous la marque commerciale "PHOSPHAC D6NK" par la maison Protex (6, rue Barbès, F-92305 Levallois).

En tant qu'alkylphénol, on utilise favorablement un alkylphénol éthoxylé, tel que le nonyl phénol éthoxylé de formule

$CH_3 - (CH_2)_8 -$ 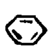 $- O - (CH_2CH_2O)_n - H$

dans laquelle n varie de 2 à 14, mais est de préférence voisin de 6. Cet alkylphénol éthoxylé présente les caractéristiques suivantes :

| | | |
|---|---|---|
| Densité à 20°C | 1,04 | (selon Norme ASTM D-4052) |
| Viscosité à 25°C | 3,6 poises | (selon Norme ASTM D-445) |
| Coloration Hazen (max) | 150 | (selon Norme NFT 20605) |
| Point de solidification | 17°C | (selon Norme NFT 20-051) |
| Point éclair | 243°C | (selon Norme ASTM D-56) |
| HLB | 11,3 | (selon méthode ATLAS) |
| Pouvoir mouillant | 20°C 0,9 g/l | (selon Norme NFT 73.406) |

(suite)

| | | |
|---|---|---|
| T° de trouble | 69 ±3 | (selon Norme ISO R1065) |

Cet alkylphénol éthoxylé posséde dans le véhicule d'excellentes qualités de mouillant dispersant. Il peut être acheté sous la marque commerciale "CEMULSOL ES" de la maison S.F.O.S. (15, bd de l'Amiral Bruix, F-75116 Paris).

Les dispersions de colorant liquide sont obtenues en mélangeant les véhicules décrits ci-dessus avec soit des pigments minéraux d'une teneur maximale d'environ 85% en poids, soit des pigments organiques d'une teneur maximale de 25 % en poids, soit encore des colorants solubles d'une concentration maximale de 30 % dans la dispersion.

Les dispersions de colorant liquide prêtes à l'emploi sont dosées, par exemple, grâce à une pompe péristaltique électronique et ajoutées à des teneurs variant entre 0,3 et 6 % aux matières plastiques à transformer, telles que les polyéthylènes, polypropylènes, polycarbonates, polyméthacrylates, polyvinyles, polystyrènes, polyuréthanes, polymères fluorés, polyester, etc. Les dispersions de colorant liquide sont susceptibles d'être utilisées pour tous les modes de transformation par injection et extrusion. Les polymères obtenus présentent une répartition homogène des matières colorantes et des autres additifs dans la matière plastique sans phénomènes de retrait ou de déformation. Grâce au véhicule particulier de la dispersion, cette dernière est parfaitement compatible avec les polymères usuels, présente une concentration pigmentaire élevée sans modification des propriétés rhéologiques du polymère, un taux d'utilisation faible de l'ordre de 0,3 à 1 % en règle générale, une force colorante ou un rendement coloristique optimum et une bonne tenue au froid et au stockage. On obtient en outre une absence totale d'effets de plastification et de lubrification du polymère, notamment du PVC rigide, ce qui autorise une coloration directe sur machine d'extrusion, d'extrusion-soufflage et injection, à l'aide d'une pompe péristaltique.

Les exemples ci-dessous illustrent des applications particulières :

| I) Tube bleu en PVC rigide | |
|---|---|
| - Composition de la dispersion (en % en poids) : | |
| Ether-alcool, comme mélange C) MD-OC-H | 84,00 |
| Condensat d'acide gras | 2,50 |
| Bleu de phtalocyanine | 13,50 |
| | 100,00 |
| - Dosage de la dispersion dans le PVC : | 0,28 % en poids |

| 2) Tube vert en PVC rigide | |
|---|---|
| - Composition de la dispersion (en % en poids) | |
| Ether-alcool, comme mélange C) MD-OC-H | 83,60 |
| Condensat d'acide gras | 0,66 |
| Vert de phtalocyanine | 7,32 |
| Noir de carbone | 2,22 |
| Jaune de chrome | 6,20 |
| | 100,00 |
| - Dosage de la dispersion dans le PVC : | 0,45 % en poids |

| 3) Tube gris en PVC rigide | |
|---|---|
| - Composition de la dispersion (en % en poids) | |
| Ether-alcool, comme mélange C) MD-OC-H | 55,95 |
| Condensat d'acide gras | 0,91 |
| Noir de carbone | 7,20 |
| Dioxyde de titane blanc | 35,94 |
| | 100,00 |

(suite)

| 3) Tube gris en PVC rigide | |
|---|---|
| - Dosage de la dispersion dans le PVC : | 0,45 % en poids |

| 4) Revêtement de sol blanc en PVC souple | |
|---|---|
| - Composition de la dispersion (en % en poids) | |
| Ether-alcool, comme mélange C) MD-O-CH | 19,00 |
| Condensat d'acide gras | 1,00 |
| Dioxyde de titane blanc | 80,00 |
| | 100,00 |
| - Dosage de la dispersion dans le PVC : | 5 % en poids |

| 5) Film blanc en polyéthylène basse densité | |
|---|---|
| - Composition de la dispersion (en % en poids) | |
| Ether-alcool, comme mélange B) MD-EA-21 | 15,90 |
| Condensat d'acide gras | 1,50 |
| Dioctylsulfosuccinate de sodium | 8,60 |
| Benzoate de sodium | 1,50 |
| Dioxyde de titane rutile | 72,50 |
| | 100,00 |
| - Dosage de la dispersion dans le polyéthylène : | 2 % en poids |

| 6) PVC souple bleu | |
|---|---|
| - Composition de la dispersion (en % en poids) | |
| Ether, voir A) MD-E-20 | 70,00 |
| Alkylphénol | 10,00 |
| Ester phosphorique | 5,00 |
| Bleu de phtalocyanine | 15,00 |
| | 100,00 |
| - Dosage de la dispersion dans le PVC : | 0,5 % en poids |

| 7) PVC souple jaune | |
|---|---|
| - Composition de la dispersion (en % en poids) | |
| Ether-alcool, comme mélange C) MD-O-CH | 40,00 |
| Alkylphénol | 7,00 |
| Ester phosphorique | 3,00 |
| Charge feldspath alcalin | 20,00 |
| Jaune de chrome | 30,00 |
| | 100,00 |
| - Dosage de la dispersion dans le PVC : | 1 % en poids |

8) Application de la formulation 3) sur une extrudeuse pour la réalisation de tubes basse pression gris en PVC rigide

Double vis conique CINCINATI-MILACRON

- Débit extrudeuse : 283 kilos/heure
- Température d'extrusion :
  entrée : 145°C - 165°C - 170°C - 150°C tête
- Dosage de la dispersion dans le PVC : 0,45 %

On obtient des conditions d'extrusion identiques à celles de tubes colorés avec de la poudre, en particulier une absence totale de lubrification, une coloration homogène, une coloration propre et facile d'emploi. Le produit fini ne présente aucun effet de plastification.

Il est bien entendu que les exemples et modes d'exécution décrits ci-dessus ne présentent aucun caractère limitatif et qu'ils peuvent recevoir toutes modifications désirables dans le cadre de l'invention, telle que définie par les revendications. En particulier, on pourra utiliser d'autres éthers et éthers-alcools aliphatiques. On pourra également ajouter des additifs destinés à apporter des effets complémentaires, tels qu'une protection thermique, une stabilisation par rapport au rayonnement ultraviolet, des effets antistatiques, ignifuges, fongicides, des agents odorants. On pourra également faire usage d'une charge composée de minéraux en feuillets, tels que les micas potassiques et/ou sodiques, muscovites, paragonites, la kaolinite, ou encore des minéraux en aiguilles comme les zéolites sodiques (natrolite) pour obtenir des effets visuels spéciaux. D'autres minéraux tels que les feldspaths potassiques et/ou sodiques, les silicates d'alumine, le corindon, les spinelles, les phosphates, en particulier l'apatite, pourront également servir d'adjuvants de charge dans la dispersion.

## Revendications

1. Préparation pour la coloration dans la masse de matières plastiques lors de la transformation de ces dernières consistant en une dispersion liquide de matières colorantes destinée à être incorporée en tant qu'ingrédient dans ces matières plastiques avant ou pendant leur transformation, la préparation comprenant au moins une matière colorante et un véhicule conférant à la préparation une consistance liquide, caractérisée en ce que le véhicule comporte des hydrocarbures aliphatiques à chaînes $C_{16}$ à $C_{24}$ choisis parmi le groupe comprenant les éthers aliphatiques à chaînes $C_{16}$ à $C_{22}$, les éthers-alcools aliphatiques à chaînes $C_{19}$ à $C_{21}$ et les acétals à chaînes $C_{18}$ à $C_{24}$.

2. Préparation selon la revendication 1, caractérisée en ce que lesdits éthers présentent une prédominance de chaînes de formule $C_{20}\,H_{42}\,O$.

3. Préparation selon la revendication 1 ou 2, caractérisée en ce que les éthers-alcools présentent une prédominance de chaînes de formule $C_{21}\,H_{44}\,O_2$.

4. Préparation selon les revendications 1,2 ou 3, caractérisée en ce que le véhicule comprend un mélange de substantiellement 40% poids d'éthers aliphatiques et de substantiellement 60% poids d'éthers-alcools aliphatiques.

5. Préparation selon l'une des revendications 1 à 4, caractérisée en ce que le véhicule comprend en outre au moins un des constituants suivants : un alcool primaire à chaînes $C_8$ à $C_{11}$ et/ou un alcène à chaînes $C_{16}$ à $C_{22}$.

6. Préparation selon la revendication 5, caractérisée en ce que le véhicule comprend un mélange de :

   - 5 à 12% en poids d'alcool primaire à chaînes $C_8$ à $C_{11}$,
   - 10 à 30% en poids d'éthers-alcools à chaînes $C_{19}$ à $C_{21}$,
   - 40 à 60% en poids d'éthers à chaînes $C_{16}$ à $C_{22}$,
   - 6 à 10% en poids d'acétals à chaînes $C_{18}$ à $C_{24}$ et d'alcènes à chaînes $C_{16}$ à $C_{22}$.

7. Préparation selon la revendication 1, caractérisé en ce qu'elle comprend au moins un agent tensio-actif choisi parmi le groupe comprenant le dioctyl-sulfosuccinate de sodium, le benzoate de sodium, les condensats d'acides gras, les esters phosphoriques et les alkylphénols.

8. Préparation selon la revendication 1, caractérisée en ce que le véhicule comprend une charge choisie parmi le

groupe de substances comprenant les micas potassiques et/ou sodiques, la kaolinite, les feldspaths potassiques et/ou sodiques, les silicates d'alumine, le corindon, les spinelles, les phosphates, en particulier l'apatite, les zéolites sodiques.

**9.** Préparation selon la revendication 1, caractérisée en ce que le véhicule comprend entre 50 à 100% en poids desdits hydrocarbures aliphatiques.

**10.** Préparation selon la revendication 1, caractérisée en ce que la dispersion présente soit une teneur maximale de 85% en poids en pigments minéraux, soit une teneur maximale de 25% en poids en pigments organiques, soit une concentration maximale de 30% en colorants solubles.

**11.** Utilisation de la préparation selon l'une des revendications 1 à 10, pour l'obtention de matières plastiques teintées dans la masse, caractérisée en ce que la préparation est ajoutée à la matière plastique à transformer à des teneurs variant entre 0,3 et 6%.

**Patentansprüche**

**1.** Zubereitung für die Masseeinfärbung von Kunstoffen bei deren Verformung, bestehend aus einer flüssigen Farbstoffdispersion, die dazu bestimmt ist, als Inhaltsstoff vor oder während ihrer Verformung in diese Kunststoffe eingearbeitet zu werden, wobei die Zubereitung zumindest einen Farbstoff sowie ein Lösemittel enthält, das der Zubereitung ein flüssige Konsistenz erteilt, dadurch gekennzeichnet, dass das Lösemittel aliphatische Kohlenwasserstoffe mit $C_{16}$- bis $C_{24}$-Ketten umfasst, die aus der Gruppe ausgewählt sind, die die aliphatischen Ether mit $C_{16}$- bis $C_{22}$-Ketten, die aliphatischen Alkoholether mit $C_{19}$- bis $C_{21}$-Ketten und die Acetale mit $C_{18}$- bis $C_{24}$-Ketten umfasst.

**2.** Zubereitung gemäss Anspruch 1, dadurch gekennzeichnet, das in den benannte Ethern Ketten der Formel $C_{20}H_{42}O$ vorherrschend sind.

**3.** Zubereitung gemäss Anspruch 1 oder Anspruch 2, dadurch gekennzeichnet, dass in den Alkoholethern Ketten der Formel $C_{21}H_{44}O_2$ vorherrschend sind.

**4.** Zubereitung gemäss Ansprüchen 1, 2 oder 3, dadurch gekennzeichnet, dass das Lösemittel eine Mischung aus im wesentlichen 40 Gew.-% an aliphatischen Ethern und im wesentlichen 60 Gew.-% an aliphatischen Alkoholethern umfasst.

**5.** Zubereitung gemäss einem der Ansprüche 1 bis 4, dadurch gekennzeichnet, dass das Lösemittel ausserdem zumindest einen der folgenden Bestandteile umfasst: einen primären Alkohol mit $C_8$- bis $C_{11}$-Ketten und/oder ein Alken mit $C_{16}$- bis $C_{22}$-Ketten.

**6.** Zubereitung gemäss Anspruch 5, dadurch gekennzeichnet, dass das Lösemittel ein Gemisch von

- 5 bis 12 Gew.-% eines primären Alkohols mit $C_8$- bis $C_{11}$-Ketten,
- 10 bis 30 Gew.-% an Alkoholethern mit $C_{19}$- bis $C_{21}$-Ketten,
- 40 bis 60 Gew.-% an Ethern mit $C_{16}$- bis $C_{22}$-Ketten,
- 6 bis 10 Gew.-% an Acetalen mit $C_{18}$- bis $C_{24}$-Ketten und an Alkenen mit $C_{16}$- bis $C_{22}$-Ketten umfasst.

**7.** Zubereitung gemäss Anspruch 1, dadurch gekennzeichnet, dass sie zumindest ein oberflächenaktives Mittel umfasst, das aus der Gruppe ausgewählt ist, die das Natriumdioctylsulfosuccinat, das Natriumbenzoat, die Fettsäurekondensate, die Phosphorsäureester und die Alkylphenole umfasst.

**8.** Zubereitung gemäss Anspruch 1, dadurch gekennzeichnet, dass das Lösemittel Füllstoff umfasst, der aus der Substanzgruppe ausgewählt ist, die die Kalium- und/oder Natriumglimmer, den Kaolinit, die Kalium- und/oder Natriumfeldspate, die Tonerdesilikate, das Aluminiumoxid, die Spinelle, die Phosphate und insbesondere den Apatit und die Natriumzeolithe umfasst.

**9.** Zubereitung gemäss Anspruch 1, dadurch gekennzeichnet, dass das Lösemittel zwischen 50 und 100 Gew.-% der benannten aliphatischen Kohlenwasserstoffe enthält.

10. Zubereitung gemäss Anspruch 1, dadurch gekennzeichnet, dass die Dispersion entweder einen Höchstgehalt von 85 Gew.-% an anorganischen Pigmenten, einen Höchstgehalt von 25 Gew.-% an organischen Pigmenten oder eine maximale Konzentration von 30 % an löslichen Farbstoffen aufweist.

11. Verwendung der Zubereitung gemäss einem der Ansprüche 1 bis 10, um in der Masse eingefärbte Kunststoffe zu erhalten, dadurch gekennzeichnet, dass die Zubereitung dem zu verformenden Kunststoff in Gehalten beigemengt wird, die zwischen 0,3 und 6 % variieren.

## Claims

1. A preparation for colouring the bulk of a plastic materials during processing of the same, consisting of a liquid dispersion of colouring materials designed for incorporation as an ingredient into these plastic materials before and during their processing, the preparation including at least one colouring material and a vehicle conferring to the preparation a liquid consistency, characterised in that the vehicle includes aliphatic hydrocarbons having $C_{16}$-$C_{22}$ chains selected from the group including aliphatic ethers with chains from $C_{16}$ to $C_{22}$, aliphatic ether alcohols with chains from $C_{19}$ to $C_{21}$ and acetals with chains from $C_{18}$ to $C_{24}$.

2. A preparation according to claim 1, characterised in that said ethers have predominantly chains having the formula $C_{20}H_{42}O$.

3. A preparation according to claim 1 or 2, characterised in that the ether-alcohols have predominantly chains having the formula $C_{21}H_{44}O_2$.

4. A preparation according to claims 1, 2 or 3, characterised in that the vehicle includes a mixture of essentially 40 % in weight of aliphatic ethers and of essentially 60 % in weight of aliphatic ether alcohols.

5. A preparation according to one of claims 1 to 4, characterised in that the vehicle further includes at least one of the following components : a primary alcohol with a chain of $C_8$ to $C_{11}$ and/or an alkene with a chain of $C_{16}$ to $C_{22}$.

6. A preparation according to claim 5, characterised in that the vehicle includes a mixture of :

- 5 to 12 % in weight of a primary alcohol with chains of $C_8$ to $C_{11}$,
- 10 to 30 % in weight of ether-alcohols with chains of $C_{19}$ to $C_{21}$,
- 40 to 60 % in weight of ethers with chains from $C_{16}$ to $C_{22}$ and
- 6 to 10 % in weight of acetals with chains from $C_{18}$ to $C_{24}$ and of alkenes with chains from $C_{16}$ to $C_{22}$.

7. A preparation according to claim 1, characterised in that it includes at least one surfactant selected from the group including sodium dioctyl-sulfosuccinate, sodium benzoate, fatty acids condensates, phosphoric esters and alkylphenols.

8. A preparation according to claim 1, characterised in that the vehicle includes a filler selected from the group of materials including potassium and/or sodium micas, kaolinite, potassium and/or sodium feldspars, alumina silicates, corundum, spinelles, phosphates and, in particular, apatite and sodium zeolites.

9. A preparation according to claim 1, characterised in that the vehicle includes between 50 and 100 % weight of said aliphatic hydrocarbons.

10. A preparation according to claim 1, characterised in that the dispersion has a maximal content of 85 % in weight of mineral pigments, or a maximal content of 25 % in weight of organic pigments, or a maximum concentration of 30 % of soluble colorants.

11. Use of the preparation according to one of claims 1 to 10 for obtaining bulk coloured plastic materials, characterised in that the preparation is added to the plastic material to be processed at levels between 0,3 and 6 %.